# EUROPÄISCHE PATENTSCHRIFT

(11) **EP 3 929 815 B1**
(45) Veröffentlichungstag und Bekanntmachung des Hinweises auf die Patenterteilung: **29.11.2023**
(21) Anmeldenummer: 20000228.5
(22) Anmeldetag: 25.06.2020
(51) Int. Cl.: G06K 17/00

(54) **BEHÄLTER ZUR AUFBEWAHRUNG VON GEGENSTÄNDEN**
CONTAINER FOR STORING OBJECTS
RÉCIPIENT DE STOCKAGE D'OBJETS

(43) Veröffentlichungstag der Anmeldung: 29.12.2021
(73) Patentinhaber: KATHREIN Sachsen GmbH, 09241 Mühlau (DE)
(72) Erfinder: Iliev, Stoyan, 83026 Rosenheim (DE); Maier, Max, 83098 Brannenburg (DE); Brunner, Thomas, 83083 Riedering (DE)
(74) Vertreter: Findeisen Neumann Scheit Partnerschaft mbB

(56) Entgegenhaltungen:
- WO-A1-2006/105822
- US-A1- 2020 050 806

## Beschreibung

Die Erfindung betrifft einen Behälter zur Aufbewahrung von Gegenständen im Behälterinneren, wobei der Behälter Seitenwände aufweist und zumindest eine dieser Seitenwände zumindest einen metallisch ausgebildeten Seitenwandabschnitt aufweist und wobei der Behälter im Behälterinneren zumindest eine UHF RFID-Antenne zur Aussendung von elektromagnetischer Strahlung der Wellenlänge λ aufweist und diese UHF RFID-Antenne mit einer RFID-Lesevorrichtung verbindbar ist.

Im Stand der Technik werden verschiedenste Ausführungen von Behältern zur Aufbewahrung von Gegenständen beschrieben. Beispielsweise ist aus der DE 299 12 346 U1 ein Kühlschrank bekannt, bei dem im Inneren deponierte RFID-Transponder drahtlos ausgelesen werden können. Hierzu sind mehrere Antennen in den Kühlfächern des Kühlschranks angebracht. Die RFID-Transponder und Antennen sind als magnetisch koppelnde Hochfrequenz (HF)-Systeme ausgelegt, welche durch eine kurze Reichweite gekennzeichnet sind. Damit ist eine räumliche Zuordnung der einzelnen in den Kühlfächern deponierten RFID-Transpondern zu diesen Kühlfächern möglich. Nachteilig ist allerdings, dass aufgrund der geringen Reichweite der magnetisch koppelnden HF-Systeme wiederum viele einzelne Antennen benötigt werden, was das System sehr teuer macht.

Für größere Reichweiten werden Ultrahochfrequenz (UHF) RFID-Systeme eingesetzt. Bei diesen Systemen erfolgt die Kopplung zwischen RFID-Transponder und Antennen üblicherweise durch Strahlungskopplung. Hier senden die Antennen eine elektromagnetische Strahlung aus, die vom RFID-Transponder aufgenommen wird, wobei die Energie der elektromagnetischen Strahlung dann zum Auslesen des Transponders genutzt wird. Die Nutzung eines UHF RFID-Systems in einem Kühlschrank wird beispielsweise in DE 20 2008 015 892 U1 beschrieben. Da die Seitenwände eines Kühlgerätes meist metallisch ausgebildet sind, ergibt sich aber der Nachteil, dass aufgrund von Leselöchern nicht alle in einem Kühlgerät deponierten Transponder auslesbar sind. Die Leselöcher entstehen, weil die elektromagnetische Welle der UHF-Strahlung an den metallischen Seitenwänden reflektiert wird und sich die einfallende Welle mit der reflektierten Welle überlagert. Da die Randbedingungen für die tangentiale elektrische Feldkomponente der UHF-Strahlung an einer elektrischen leitenden Wand gleich null ist, weist die reflektierte UHF-Strahlung eine Phasenverschiebung von 180° auf. Mit der Überlagerung der einfallenden Welle entsteht eine stehende Welle. An den Stellen, die mit Abstand z = - (2n + 1)(λ/4) von der elektrisch leitenden Wand entfernt sind, befindet sich ein Maximum des elektrischen Felds, wobei n eine natürliche Zahl und λ die Wellenlänge der elektromagnetischen Strahlung ist. Im Abstand z = -n(λ/2) befinden sich Nullstellen des elektrischen Feldes. Ist nun ein RFID-Transponder in einer dieser Nullstellen angeordnet, kann dieser RFID-Transponder nicht mit Energie versorgt und damit nicht ausgelesen werden. Der RFID-Transponder befindet sich damit in einem Leseloch.

Aus der US 2020/050806 A1 ist ein metallischer Behälter mit einer im Inneren angeordneten flächigen, elektrisch leitfähigen Struktur bekannt. Diese flächige, elektrisch leitfähige Struktur ist beabstandet zu den Behälterinnwänden angeordnet und punktuell an den im Behälterinnen befestigt. Weiterhin ist die flächige, elektrisch leitfähige Struktur so ausgebildet, dass diese im Behälterinneren schwingen kann, wobei die Schwingung durch eine Bewegung des Behälters induziert wird. Dies ist allerdings aufwändig.

Aufgabe der Erfindung ist es daher, einen metallische Seitenwände aufweisenden Lagerbehälter vorzuschlagen, in dem unter Nutzung eines UHF RFID-Systems im Behälter deponierte UHF RFID-Transponder an jeder Stelle im Behälter ausgelesen werden können.

Diese Aufgabe wird mit einem Behälter mit den Merkmalen der Ansprüche 1 und 11 gelöst.

Vorteilhafte Ausgestaltungen sind in den Unteransprüchen aufgeführt Der erfindungsgemäße Behälter zur Aufbewahrung von Gegenständen im Behälterinneren weist Seitenwände auf, wobei zumindest eine dieser Seitenwände mit zumindest einem metallischen Seitenwandabschnitt ausgebildet ist. Im Behälterinneren ist zumindest eine UHF RFID-Antenne zur Aussendung von elektromagnetischer Strahlung der Wellenlänge λ vorgesehen, wobei diese UHF RFID-Antenne mit einer RFID-Lesevorrichtung verbindbar ist. Im Behälterinneren ist zum metallisch ausgebildeten Seitenwandabschnitt eine flächige, elektrisch leitfähige Struktur beabstandet angeordnet. Weiterhin ist die flächige, elektrisch leitfähige Struktur in ihrer Position gegenüber dem metallisch ausgebildeten Seitenwandabschnitt und/oder in ihren elektrischen Eigenschaften zyklisch veränderbar. Zyklisch im Sinne der Anmeldung ist, dass die Änderung der Position oder der elektrischen Eigenschaften der leitfähigen zwischen einzelnen Lesevorgängen der RFID-Lesevorrichtung erfolgt. Die zyklischen Änderungen der Position und/oder der elektrischen Eigenschaften sollen insbesondere auch bei geschlossenem Behälter möglich sein.

Erfindungsgemäß ist in einer zum metallisch ausgebildeten Seitenwandabschnitt parallelen Ebene eine Position der elektrisch leitfähigen Struktur gegenüber dem metallisch ausgebildeten Seitenwandabschnitt variierbar. Der Abstand zwischen der elektrisch leitfähigen Struktur und dem metallisch ausgebildeten Seitenwandabschnitt nimmt einen Wert von ungleich λ/2 oder ungleich einem Vielfachen von λ/2 an. In einer ersten Position der elektrisch leitfähigen Struktur werden Teile des metallisch ausgebildeten Seitenwandabschnitts von der elektrisch leitfähigen Struktur verdeckt. In einer gegenüber der ersten Position verschobenen zweiten Position der elektrisch leitfähigen Struktur werden Teile des zuvor verdeckten Seitenwandabschnitts freigelegt und andere Teile des metallisch ausgebildeten Seitenwandabschnitts von der elektrisch leitfähigen Struktur verdeckt. Die von der UHF RFID-Antenne emittierte elektromagnetische Welle breitet sich im Behälterinneren aus und wird bei der ersten Position der elektrisch leitfähigen Struktur u.a. an den Teilen des metallisch ausgebildeten Seitenwandabschnitts reflektiert, die nicht von der elektrisch leitfähigen Struktur verdeckt sind. Dabei werden wie oben beschrieben stehende Wellen mit Nullstellen der Feldstärke des elektrischen Feldes gebildet. Wird nun die elektrisch leitfähige Struktur in die gegenüber der ersten Position verschobene zweite Position bewegt, ändert sich im Behälterinneren der elektrisch wirksame Aufbau. Insbesondere werden nach dem Verschieben der elektrisch leitfähigen Struktur nun Anteile der elektromagnetischen Strahlung, die zuvor an dem metallisch ausgebildeten Seitenwandabschnitt reflektiert wurden, nun an der elektrisch leitfähigen Struktur reflektiert. Für diese Anteile der elektromagnetischen Strahlung wird sich daher eine anders positionierte stehende Welle ausbilden, wobei die Verschiebung der stehenden Welle gerade dem Abstand zwischen dem metallisch ausgebildeten Seitenwandabschnitt und der elektrisch leitfähigen Struktur entspricht. Da der Abstand ungleich λ/2 oder ungleich einem Vielfachen von λ/2 ist, wird sichergestellt, dass trotz Verschiebung der stehenden Welle die Nullstellen nicht wieder an derselben Position liegen. Die Positionierung der elektrisch leitfähigen Struktur ist nicht auf zwei Positionen beschränkt. Ebenso ist auch eine Vielzahl verschiedener Positionen möglich.

In einer Ausführung weist die elektrisch leitfähige Struktur eine metallische Fläche auf, die drehend gelagert und antreibbar ist. Der Antrieb kann beispielsweise ein Motor sein. Durch die Drehung einer metallischen Fläche in der zum metallisch ausgebildeten Seitenwandabschnitt parallelen Ebene sind in einfacher Weise viele verschiedene Positionen der metallischen Fläche bzw. Teilen der metallischen Fläche realisierbar. Ausgenommen ist lediglich eine sich um ihren Mittelpunkt drehende Kreisfläche, da hier faktisch keine (elektrisch wirksame) Veränderung der Positionierung der metallischen Fläche vor dem metallisch ausgebildetem Seitenwandabschnitt erfolgt.

Eine Ausgestaltung sieht vor, dass die metallische Fläche als ein Kreisflächenausschnitt oder eine Vieleckfläche ausgebildet ist. Beispielsweise kann bei einer Drehung einer Halbkreisfläche um ihren geometrischen Schwerpunkt erreicht werden, dass zyklisch ein Teil des metallisch ausgebildeten Seitenwandabschnitts verdeckt und wieder aufgedeckt wird. Faktisch werden also die Nullstellen des elektrischen Feldes der stehenden Welle zyklisch hin und her bewegt und damit die Leselöcher (im zeitlichen Mittel) eliminiert. Vorteilhafterweise sind natürlich die Drehfrequenz der metallischen Fläche und die Zeitpunkte zum Auslesen der RFID-Transponder so aufeinander abgestimmt, dass das Lesen der RFID-Transponder nicht immer bei derselben Position der metallischen Fläche durchgeführt wird.

Es wird vorschlagen, dass ein Drehpunkt der metallischen Fläche in oder außerhalb des geometrischen Schwerpunkts der metallischen Fläche angeordnet ist. Bei einer Lagerung außerhalb des geometrischen Schwerpunktes kann die metallische Fläche grundsätzlich auch als Kreisfläche ausgestaltet sein, wobei die Veränderung der Position der elektrisch leitfähigen Struktur vor dem Seitenwandabschnitt durch eine exzentrische Drehung der Kreisfläche erreicht wird. Eine Lagerung im geometrischen Schwerpunkt ist vorteilhaft zur Erzeugung einer Drehung der metallischen Fläche ohne eine Unwucht.

Durch die sich drehende metallische Fläche wird nun im Behälterinneren faktisch der elektrisch wirksame Aufbau ständig geändert, sodass die Nullstellen der Feldstärke der stehenden Wellen ständig verschoben werden und keine dauerhaften Leselöcher gebildet werden. Bei einer gegebenen Position der als metallische Flächen ausgebildeten elektrisch leitfähigen Struktur wird ein Teil der von der UHF RFID-Antenne emittierten elektromagnetischen Strahlung an Seitenwandabschnitten reflektiert, die nicht von der elektrisch leitfähigen Struktur verdeckt sind. Durch die Überlagerung von einfallender Strahlung und reflektierter Strahlung entsteht wie oben beschrieben eine stehende Welle mit Nullstellen der elektrischen Feldstärke. Werden nun die metallischen Flächen der elektrisch leitfähigen Struktur weitergedreht, so werden zumindest Teile der zuvor verdeckten Seitenwandabschnitte sichtbar und zuvor nicht von den metallischen Flächen verdeckte Seitenwandabschnitt überdeckt. Teile der von der UHF RFID-Antenne emittierten elektromagnetischen Strahlung, die zuvor an Seitenwandabschnitten reflektiert worden wären, werden nun bereits an einer metallischen Fläche der elektrisch leitfähigen Struktur reflektiert. Auch hier bildet sich dann wie oben beschrieben eine stehende Welle aus, wobei aber die Nullstellen der elektrischen Feldstärke dieser stehenden Welle gegenüber der vorherigen stehenden Welle um den Abstand zwischen dem metallisch ausgebildeten Seitenwandabschnitt und der elektrisch leitfähigen Struktur verschoben sind.

In einer alternativen Ausführung des Behälters ist die elektrische Leitfähigkeit der elektrisch leitfähigen Struktur veränderbar, wobei auch hier der Abstand zwischen der elektrisch leitfähigen Struktur und dem metallisch ausgebildetem Seitenwandabschnitt ungleich λ/2 oder ungleich einem Vielfachen von λ/2 ist. Neben einer Positionsänderung einer konstant leitfähigen Struktur kann derselbe Effekt auch durch eine Veränderung der elektrischen Leitfähigkeit der elektrisch leitfähigen Struktur erreicht werden. Beispielsweise liegt in einem Zustand der elektrisch leitfähigen Schicht nur eine extrem niedrige elektrische Leitfähigkeit vor, sodass ein deutlich überwiegender Teil der von der RFID-Antenne emittierten elektromagnetischen Strahlung die elektrisch leitfähige Struktur passiert und an dem dahinter liegenden metallisch ausgebildeten Seitenwandabschnitt reflektiert wird und sich eine stehende Welle aus diesen reflektierten Anteilen mit einfallenden Anteilen der Welle ausbildet. In einem weiteren Zustand der elektrisch leitfähigen Struktur ist die elektrische Leitfähigkeit deutlich erhöht, sodass die von der RFID-Antenne emittierte elektromagnetische Strahlung bereits an der elektrisch leitfähigen Struktur reflektiert wird und sich damit eine gegenüber der zuvor genannten stehenden Welle verschobene stehende Welle ausgebildet wird.

Eine Ausgestaltung sieht vor, dass die elektrische Leitfähigkeit der elektrisch leitfähigen Struktur durch Anlegen einer elektrischen Spannung veränderbar ist.

Es wird vorgeschlagen, dass die elektrisch leitfähige Struktur eine elektrochrome Schicht aufweist.

Eine vorteilhafte Ausgestaltung sieht vor, dass die elektrochrome Schicht in zumindest zwei Schichtabschnitte unterteilt ist und diese Schichtabschnitte unabhängig voneinander mit der elektrischen Spannung beaufschlagbar sind. Beispielsweise kann die elektrisch leitfähige Struktur eine Platte mit mehreren einzeln ansteuerbaren Feldern von elektrochromen Schichten sein. Je nachdem welche Felder elektrisch leitend oder isolierend geschaltet werden, ergeben sich unterschiedliche elektrisch wirksame Geometrien, die eine Verschiebung der Leselöcher und Feldmaxima bewirken.

In einer weiteren alternativen Ausführung des Behälters ist die elektrisch leitfähige Struktur mit einem frequenzabhängigen Reflexionskoeffizienten ausgebildet.

Es wird vorgeschlagen, dass die elektrisch leitfähige Struktur eine frequenzselektive Oberfläche (FSS) aufweist und dass die elektrisch leitfähige Struktur für elektromagnetische Strahlung eines ISM-Bandes für UHF RFID-Anwendungen transparent und für ein anderes ISM-Band für UHF RFID-Anwendungen reflektierend ist. Als ISM-Bänder (Industrial, Scientific and Medical Band) werden Frequenzbereiche bezeichnet, die durch Hochfrequenz-Geräte in Industrie, Wissenschaft, Medizin, in häuslichen und ähnlichen Bereichen lizenzfrei und meist genehmigungsfrei genutzt werden können. In Deutschland liegen diese Frequenzbereiche beispielsweise zwischen 865 - 868 MHz und 915 - 921 MHz, sodass für diesen Fall die frequenzselektive Oberfläche der elektrisch leitfähigen Struktur beispielsweise so ausgebildet ist, dass diese für elektromagnetische Strahlung mit einer Frequenz von 865 - 868 MHz reflektierend und für elektromagnetische Strahlung mit einer Frequenz von 915 - 921 MHz transparent ist. Die elektromagnetische Strahlung mit Frequenzbereich 915 - 921 MHz passiert also die elektrisch leitfähige Struktur und wird an dem metallisch ausgebildeten Seitenwandabschnitt reflektiert. Die elektromagnetische Strahlung des Frequenzbereichs 865 - 868 MHz wird hingegen an der frequenzselektiven Oberfläche der elektrisch leitfähigen Struktur reflektiert. Somit werden für diesen Fall bei einem Abstand von beispielsweise λ/4 zwischen dem metallisch ausgebildeten Seitenwandabschnitt und der elektrisch leitfähigen Struktur die Nullstellen der stehenden Welle der elektromagnetischen Strahlung des einen Frequenzbandes nicht mit den Nullstellen der stehenden Welle der elektromagnetischen Strahlung des anderen Frequenzbandes zusammenfallen.

Gegenstände im Behälterinneren, die mit einem RFID-Transponder versehen sind, können nun mit dem erfindungsgemäßen Behälter an jeder Stelle im Behälterinneren ausgelesen werden. Es wird damit eine vollständige Erfassung von mit einem RFID-Transponder versehenen Gegenständen im Behälterinneren sichergestellt.

In einer vorteilhaften Ausführung nimmt der Abstand zwischen der elektrisch leitfähigen Struktur und dem metallisch ausgebildeten Seitenwandabschnitt einen Wert von λ/8 bis kleiner λ/2 ein.

Es wird vorgeschlagen, dass der Abstand zwischen der elektrisch leitfähigen Struktur und dem metallisch ausgebildeten Seitenwandabschnitt λ/4 ist.

In einer weiteren alternativen Ausführung des Behälters ist ein Abstand zwischen der elektrisch leitfähigen Struktur und der metallisch ausgebildeten Seitenwand zyklisch variierbar. Durch die zyklische Abstandsänderung wird erreicht, dass die Nullstellen der elektrischen Feldstärke der sich an der elektrisch leitfähigen Struktur ausbildenden stehenden Wellen permanent verschoben werden und damit im zeitlichen Mittel keine Leselöcher ausgebildet werden.

In einer Ausgestaltung ist der Behälter so ausgeführt, dass die Änderung des Abstandes zwischen der elektrisch leitfähigen Struktur und der metallisch ausgebildeten Seitenwand mit einer Abstandsänderung von λ/8 bis kleiner λ/2 erfolgen kann.

Es wird vorgeschlagen, dass die zumindest eine elektrisch leitfähige Struktur in Höhe eines Einlegebodens des Behälters angeordnet ist.

In einer Ausführung ist der Behälter ein Kühlschrank oder eine Verkaufsautomat.

Es ist damit eine Inventur aller im Kühlschrank oder Verkaufsautomat deponierten und mit einem RFID-Transponder versehenen Produkte durchführbar. Die Inventur kann beispielsweise als Echtzeit-Inventur bei geschlossener Kühlschrank- bzw. Automatentür durchgeführt werden. Eine derartige Echtzeit-Inventur mittels RFID-Technik kann z.B. in kommerziellen Kühlschränken verwendet werden um eine einfache und schnelle Abrechnung der entnommenen Produkte zu realisieren. Dazu wird zum Beispiel beim Befüllen oder nach Abschluss des Befüllvorgangs mittels der RFID-Technik eine Inventur über den Inhalt erstellt. Zum Entnehmen eines Produktes ist es notwendig die Kühlschranktür zu öffnen. Dazu müssen sich die einzelnen Kunden identifizieren. Die Personen können ein oder mehrere Produkte ihrer Wahl entnehmen. Nach Schließen der Kühlschranktür wird erneut eine Inventur durchgeführt. Durch Vergleich mit der vorhergehenden Inventur können die entnommenen Produkte identifiziert werden. Diese können dem Kunden angezeigt und in Rechnung gestellt werden. Die Anzeige kann z. B.: über einen Monitor am Kühlschrank, Handy-App oder per Email erfolgen. Der Prozess kann erfordern, dass der Kunde die entnommenen Produkte vorher bestätigt, bevor sie ihm in Rechnung gestellt werden.

Eine Echtzeit-Inventur mittels RFID-Technik kann aber auch in privaten Haushaltsgeräten eingesetzt werden um eine Inventur der sich im Kühlschrank befindenden Artikel zu ermöglichen. Falls der RFID Kühlschrank über eine Cloud-Verbindung verfügt, z.B. über WLAN oder Ethernet, können die Daten im Kühlschrank online verfügbar gemacht werden. Durch die online Verfügbarkeit kann der Kunde sich über eine entsprechende Handy-App oder Webanwendung Kochrezepte besorgen, die speziell auf den aktuellen Inhalt seines Kühlschranks abgestimmt sind. Ebenso können individuell abgestimmte Einkaufslisten erstellt werden. Die Produkte auf den Einkaufslisten können dann vom Kunden selbst besorgt werden oder als Auftragsliste für einen Lieferdienst dienen. Des Weiteren könnte auch ein im RFID-Transponder für das jeweilige Produkt geltende Mindesthaltbarkeitsdatum ausgelesen werden. Das Gerät kann dann nach einer Inventur rechtzeitig auf das Ablaufdatum hinweisen und Tipps geben, wie zeitnah ablaufende Produkte am besten zu verwerten sind. Dadurch wird das Risiko einer Verunreinigung des Kühlschranks durch abgelaufene Produkte reduziert. Ebenso wird ein unnötiges Wegwerfen von Lebensmitteln vermieden.

Der Kühlschrank oder Verkaufsautomat kann auch über eine Datenschnittstelle mit einem Dienstleister verbunden sein, sodass dieser über den aktuellen Verbrauch informiert wird und damit ein verbrauchsabhängiges Nachfüllen durch den Dienstleister organisierbar ist. Dadurch werden die Nachfüllungen optimal auf die aktuellen Bedürfnisse abgestimmt und unnötige Lieferfahrten vermieden.

Die Erfindung ist aber nicht auf geschlossene Behälter wie einen Kühlschrank beschränkt, sondern beispielsweise auch bei offenen Lagerbehältern nutzbar. Ebenso kann die erfindungsgemäße Verschiebung der Nullstellen der elektrischen Feldstärke auch in Lager- und Werkshallen Anwendung finden, bei denen Lagerabschnitte (als Behälter) beispielsweise durch metallische Wandelemente (die dann die Seitenwände der Lagerabschnitte bilden) voneinander getrennt sind.

Nachfolgend wird ein Ausführungsbeispiel der Erfindung anhand der Zeichnungen erläutert. Es zeigen:
- Fig. 1: eine räumliche Darstellung einer Ausführung eines erfindungsgemäßen Behälters zur Aufbewahrung von Gegenständen
- Fig. 2a: einen Ausschnitt einer der Seitenwände des Kühlschranks in einer Aufsicht
- Fig. 2b: eine Seitenansicht der Seitenwand gemäß Fig. 2a
- Fig. 3a: einen Ausschnitt der Seitenwand des gemäß Fig. 2a mit einer weiteren Ausführung der elektrisch leitfähigen Struktur
- Fig. 3b: eine Seitenansicht der Seitenwand gemäß Fig. 3a

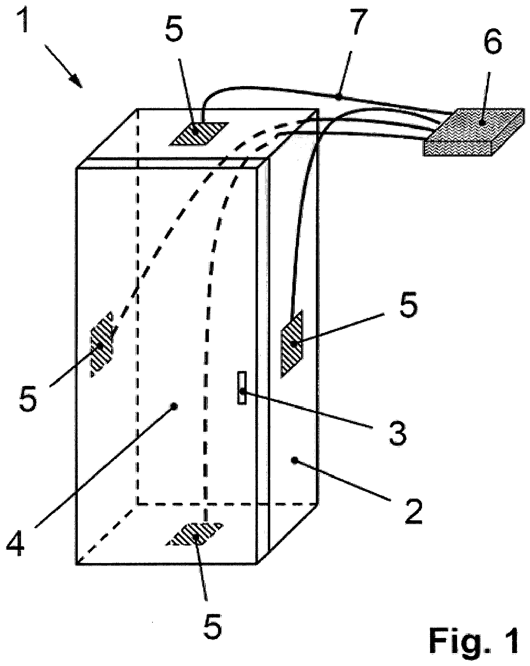

**Fig. 1** zeigt eine räumliche Darstellung einer Ausführung eines erfindungsgemäßen Behälters 1 zur Aufbewahrung von Gegenständen, wobei diese Gegenstände nicht gezeigt sind. Der dargestellte Behälter 1 ist als Kühlschrank ausgeführt. Dieser Kühlschrank weist sechs metallisch ausgebildete Seitenwände 2 auf, wobei die vordere Seitenwand 2 als Türelement mit einem Türgriff 3 ausgestaltet ist. Die Seitenwände 2 umschließen ein Behälterinneres 4, in dem die Gegenstände deponiert werden können.

Weiterhin sind im Behälter 1 in der dargestellten Ausführung vier UHF RFID-Antennen 5 zur Aussendung von elektromagnetischer Strahlung der Wellenlänge λ angeordnet. Zwei der UHF RFID-Antennen 5 befinden sich an je einer seitlichen Seitenwand 2 und je eine der UHF RFID-Antennen 5 befindet sich an der unteren und der oberen Seitenwand 2. Die Erfindung ist nicht auf diese Anzahl und Anordnung der UHF RFID-Antennen 5 beschränkt. Beispielsweise kann der Behälter 1 auch nur eine UHF RFID-Antenne 5 aufweisen oder zwei UHF RFID-Antennen 5 sind lediglich an den seitlichen Seitenwänden 2 angeordnet.

Die gezeigten UHF RFID-Antennen 5 sind mit einer RFID-Lesevorrichtung 6 über Kabelverbindungen 7 verbunden. In der Darstellung ist diese außerhalb des Kühlschranks angeordnet. Diese kann allerdings auch am Kühlschrank selbst angebracht sein.

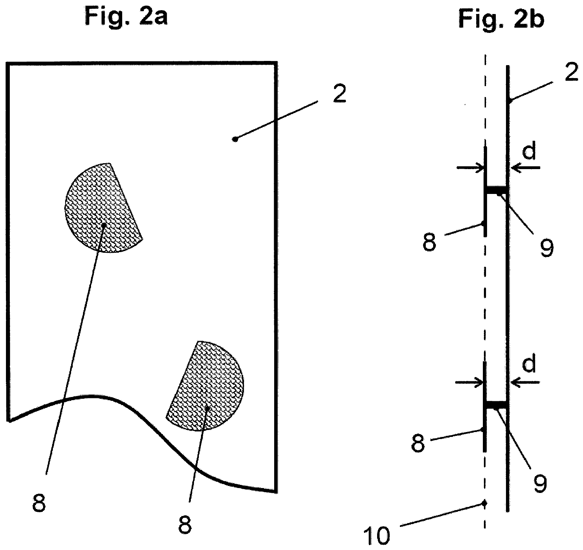

**Fig. 2a** zeigt einen Ausschnitt einer der Seitenwände 2 des Kühlschranks in einer Aufsicht, wobei der Blick vom Behälterinneren 4 auf die Seitenwand 2 gerichtet ist. In der **Fig. 2b** ist eine um 180° gedrehte Ansicht der Seitenwand 2 aus **Fig. 2a** zu sehen, sodass eine Seitenansicht der Seitenwand 2 dargestellt ist. In Richtung Behälterinneres 4 ist beabstandet zur Seitenwand 2 eine flächige, elektrisch leitfähige Struktur angeordnet. In der dargestellten Ausführung weist diese elektrisch leitfähige Struktur metallische Flächen 8 auf. Diese metallischen Flächen 8 sind drehend gelagert und von einem (nicht dargestellten) Motor antreibbar, wobei eine Drehachse 9 am Kreismittelpunkt angeordnet ist. Die metallischen Flächen 8 sind als Kreisflächenausschnitte ausgeführt. Der Abstand d zwischen den metallischen Flächen 8 und der Seitenwand 2 beträgt λ/4, wobei die Drehachse 9 hier auch als Abstandshalter wirkt. Mit der Drehung der Kreisflächenausschnitte wird in einer zur metallisch ausgebildeten Seitenwand 2 parallelen Ebene 10 eine (zumindest) abschnittsweise Veränderung der Lage der metallischen (und elektrisch leitfähigen) Flächen 8 vor der Seitenwand 2 erreicht.

Die Erfindung ist nicht auf die dargestellte Ausführung der metallischen Flächen 8 beschränkt. Beispielsweise können die metallischen Flächen 8 auch als Vieleckflächen ausgestaltet sein. Auch die Lage des Drehpunktes ist nicht auf eine zentrische Anordnung beschränkt. Der Drehpunkt kann beispielsweise auch außerhalb des geometrischen Schwerpunktes der metallischen Fläche 8 angeordnet sein. Ebenso ist die Anzahl der metallischen Flächen 8 vor der Seitenwand 2 nicht auf zwei beschränkt.

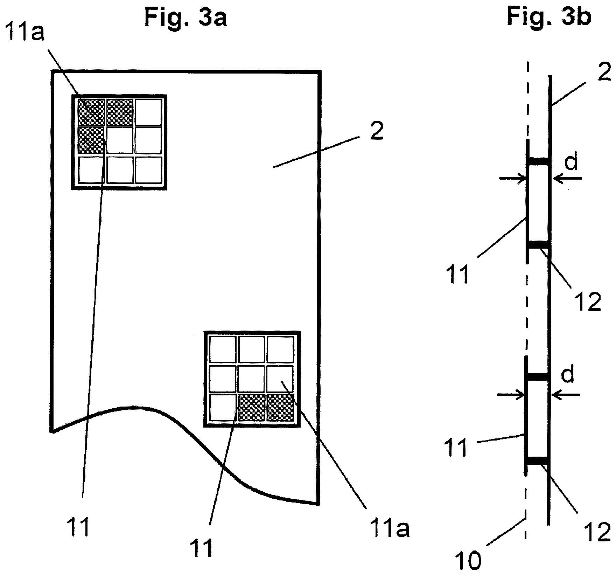

**Fig. 3a** zeigt einen Ausschnitt der Seitenwand 2 des Kühlschranks gemäß **Fig. 2a** mit einer weiteren Ausführung der elektrisch leitfähigen Struktur. **Fig. 3b** zeigt eine zu **Fig. 2b** äquivalente Darstellung mit der weiteren Ausführung der elektrisch leitfähigen Struktur. In dieser weiteren Ausführung weist die elektrisch leitfähige Struktur eine elektrochrome Schicht 11 auf, bei der die elektrische Leitfähigkeit durch Anlegen einer elektrischen Spannung veränderbar ist. Damit ist die elektrische Leitfähigkeit der elektrisch leitfähigen Struktur in der zur metallisch ausgebildeten Seitenwand 2 parallelen Ebene 10 variierbar. Die beiden dargestellten elektrochromen Schichten 11 sind über Abstandshalter 12 in einem Abstand von λ/4 vor der metallisch ausgebildeten Seitenwand 2 positioniert. Weiterhin sind in der dargestellten Ausführung die beiden elektrochromen Schichten 11 jeweils in neun Schichtabschnitte 11a unterteilt, wobei diese Schichtabschnitte 11a unabhängig voneinander mit einer elektrischen Spannung beaufschlagbar und damit deren elektrische Leitfähigkeiten unabhängig voneinander einstellbar sind. In der Darstellung sind Schichtabschnitte 11a mit einer höheren elektrischen Leitfähigkeit dunkler dargestellt als Schichtabschnitte 11a mit einer niedrigeren elektrischen Leitfähigkeit.

In einer weiteren (nicht dargestellten) Ausführung weist die vor der metallisch ausgebildeten Seitenwand 2 beabstandet angeordnete elektrisch leitfähige Struktur eine frequenzselektive Oberfläche (FSS) auf. Diese frequenzselektive Oberfläche ist für elektromagnetische Strahlung mit einer Frequenz von 865 - 868 MHz reflektierend und für elektromagnetische Strahlung mit einer Frequenz von 915 - 921 MHz transparent.

Allerdings ist die Erfindung nicht auf diese Ausführung der frequenzselektiven Oberfläche der elektrisch leitfähigen Struktur beschränkt. In einer weiteren Ausführung kann die frequenzselektive Oberfläche beispielsweise auch für elektromagnetische Strahlung mit einer Frequenz von 915 - 921 MHz reflektierend und für elektromagnetische Strahlung mit einer Frequenz von 915 - 921 865 - 868 MHz transparent sein. Weiterhin ist eine entsprechende Auslegung auf andere ISM-Bänder möglich.

Die verschiedenen Ausführungen der elektrisch leitfähigen Struktur sind jeweils in Höhe eines (nicht gezeigten) Einlegebodens des Behälters 1 angeordnet. Allerdings ist dies nicht zwingend, sodass grundsätzlich auch andere Anordnungen im Behälter 1 möglich sind.

Sowohl die sich drehenden metallischen Schichten 8, als auch die elektrochromen Schichten 11 und die frequenzselektiven Oberflächen müssen nicht zwingend mit einem Abstand von λ/4 vor dem metallisch ausgebildeten Seitenwandabschnitt angeordnet sein. Ebenso können diese auch mit einem Abstand von λ/8 bis kleiner λ/2 beabstandet sein. Auch größere Abstände sind möglich, sofern der Abstand ungleich λ/2 oder ungleich einem Vielfachen von λ/2 ist.

In einer nicht dargestellten Ausführung sind vor der metallisch ausgebildeten Seitenwand 2 metallische Flächen als elektrisch leitfähige Struktur angeordnet. Diese metallischen Flächen sind, beispielsweise über motorisch angetriebene Teleskopstangen, in ihrem Abstand zur metallisch ausgebildeten Seitenwand 2 variierbar. Der Abstand ist mit einer Abstandsänderung von λ/8 bis kleiner λ/2 veränderbar.

Die Erfindung ist nicht auf die Ausführung des Kühlschranks beschränkt, sondern umfasst grundsätzlich jede Art Behälter 1 zur Aufnahme von Gegenständen. Weiterhin müssen auch nicht zwingend alle Seitenwände 2 vollständig metallisch ausgebildet sein. Die Erfindung ist auch dann anwendbar, wenn zumindest eine der Seitenwände 2 zumindest einen metallisch ausgebildeten Seitenwandabschnitt aufweist.

### Bezugszeichenliste

- 1: Behälter
- 2: Seitenwand
- 3: Türgriff
- 4: Behälterinneres
- 5: UHF RFID-Antenne
- 6: RFID-Lesevorrichtung
- 7: Kabelverbindung
- 8: metallische Fläche
- 9: Drehachse
- 10: zur Seitenwand parallele Ebene
- 11: elektrochrome Schicht
- 11a: Schichtabschnitt
- 12: Abstandshalter
- d: Abstand

## Patentansprüche

1. Behälter (1) zur Aufbewahrung von Gegenständen im Behälterinneren (4), wobei der Behälter (1) Seitenwände (2) aufweist und zumindest eine dieser Seitenwände (2) zumindest einen metallisch ausgebildeten Seitenwandabschnitt aufweist und wobei der Behälter (1) im Behälterinneren (4) zumindest eine UHF RFID-Antenne (5) zur Aussendung von elektromagnetischer Strahlung der Wellenlänge λ aufweist und diese UHF RFID-Antenne (5) mit einer RFID-Lesevorrichtung (6) verbindbar ist, wobei der Behälter zumindest eine flächige, elektrisch leitfähige Struktur aufweist und diese elektrisch leitfähige Struktur gegenüber dem metallisch ausgebildeten Seitenwandabschnitt in Richtung Behälterinneres (4) beabstandet angeordnet ist und wobei die flächige, elektrisch leitfähige Struktur in ihrer Position gegenüber dem metallisch ausgebildetem Seitenwandabschnitt und/oder sich in ihren elektrischen Eigenschaften zyklisch ändert, **dadurch gekennzeichnet, dass** der Abstand (d) zwischen der elektrisch leitfähigen Struktur und dem metallisch ausgebildeten Seitenwandabschnitt einen Wert von ungleich λ/2 oder ungleich einem Vielfachen von λ/2 aufweist und dass in einer zum metallisch ausgebildeten Seitenwandabschnitt parallelen Ebene (10) die elektrische Leitfähigkeit der elektrisch leitfähigen Struktur sich ändert und/oder eine Position der elektrisch leitfähigen Struktur variiert und/oder die elektrisch leitfähige Struktur mit einem frequenzabhängigen Reflexionskoeffizienten ausgebildet ist.

2. Behälter (1) nach Anspruch 1, **dadurch gekennzeichnet, dass** der Abstand (d) zwischen der elektrisch leitfähigen Struktur und dem metallisch ausgebildeten Seitenwandabschnitt einen Wert von λ/8 bis kleiner λ/2 aufweist.

3. Behälter (1) nach Anspruch 2, **dadurch gekennzeichnet, dass** der Abstand (d) zwischen der elektrisch leitfähigen Struktur und dem metallisch ausgebildeten Seitenwandabschnitt einen Wert von λ/4 aufweist.

4. Behälter (1) nach einem der Ansprüche 1 bis 3, **dadurch gekennzeichnet, dass** die elektrisch leitfähige Struktur eine metallische Fläche (8) aufweist und diese metallische Fläche (8) drehend gelagert und antreibbar ist.

5. Behälter (1) nach Anspruch 4, **dadurch gekennzeichnet, dass** die metallische Fläche (8) als ein Kreisflächenausschnitt oder eine Vieleckfläche ausgebildet ist.

6. Behälter (1) nach Anspruch 5, **dadurch gekennzeichnet, dass** ein Drehpunkt der metallischen Fläche (8) im oder außerhalb des geometrischen Schwerpunkts der metallischen Fläche (8) angeordnet ist.

7. Behälter (1) nach einem der Ansprüche 1 bis 3, **dadurch gekennzeichnet, dass** die elektrische Leitfähigkeit der elektrisch leitfähigen Struktur durch Anlegen einer elektrischen Spannung veränderbar ist.

8. Behälter (1) nach Anspruch 7, **dadurch gekennzeichnet, dass** die elektrisch leitfähige Struktur eine elektrochrome Schicht (11) aufweist.

9. Behälter (1) nach Anspruch 8, **dadurch gekennzeichnet, dass** die elektrochrome Schicht (11) in zumindest zwei Schichtabschnitte (11a) unterteilt ist und diese Schichtabschnitte (11a) unabhängig voneinander mit der elektrischen Spannung beaufschlagbar sind.

10. Behälter (1) nach einem der Ansprüche 1 bis 3, **dadurch gekennzeichnet, dass** die elektrisch leitfähige Struktur eine frequenzselektive Oberfläche (FSS) aufweist und dass die elektrisch leitfähige Struktur für elektromagnetische Strahlung eines ISM-Bandes für UHF RFID-Anwendungen transparent und für elektromagnetische Strahlung eines anderen ISM-Bandes für UHF RFID-Anwendungen reflektierend ist.

11. Behälter (1) zur Aufbewahrung von Gegenständen im Behälterinneren (4), wobei der Behälter (1) Seitenwände (2) aufweist und zumindest eine dieser Seitenwände (2) zumindest einen metallisch ausgebildeten Seitenwandabschnitt aufweist und wobei der Behälter (1) im Behälterinneren (4) zumindest eine UHF RFID-Antenne (5) zur Aussendung von elektromagnetischer Strahlung der Wellenlänge λ aufweist und diese UHF RFID-Antenne (5) mit einer RFID-Lesevorrichtung (6) verbindbar ist, wobei der Behälter zumindest eine flächige, elektrisch leitfähige Struktur aufweist und diese elektrisch leitfähige Struktur gegenüber dem metallisch ausgebildeten Seitenwandabschnitt in Richtung Behälterinneres (4) beabstandet angeordnet ist und wobei die flächige, elektrisch leitfähige Struktur in ihrer Position gegenüber dem metallisch ausgebildetem Seitenwandabschnitt und/oder sich in ihren elektrischen Eigenschaften zyklisch ändert, **dadurch gekennzeichnet, dass** der Abstand (d) zwischen der elektrisch leitfähigen Struktur und der metallisch ausgebildeten Seitenwand mit einem Wert von λ/8 bis kleiner λ/2 zyklisch variiert.

12. Behälter (1) nach einem der vorgenannten Ansprüche, **dadurch gekennzeichnet, dass** die zumindest eine elektrisch leitfähige Struktur in Höhe eines Einlegebodens des Behälters (1) angeordnet ist.

13. Behälter (1) nach einem der vorgenannten Ansprüche, **dadurch gekennzeichnet, dass** der Behälter (1) ein Kühlschrank oder ein Verkaufsautomat ist.

## Claims

1. Container (1) for storing objects in the container interior (4), said container (1) having side walls (2), at least one of said side walls (2) having at least one metallically formed side wall section, said container (1) having at least one UHF RFID antenna (5) for emitting electromagnetic radiation of wavelength λ inside said container (4), said UHF RFID antenna (5) being connectible to an RFID reading device (6), said container having at least one planar, electrically conductive structure, said electrically conductive structure being arranged at a distance from the metallically formed side wall section in the direction of the container interior (4), and wherein said planar, electrically conductive structure cyclically changes its position relative to the metallically formed side wall section and/or said planar electrically conductive structure cyclically changes its electrical properties, **characterised in that** the distance (d) between said electrically conductive structure and the metallically formed side wall section has a value not equal to λ/2 or not equal to a multiple of λ/2 and **in that**, in a plane (10) parallel to the metallically formed side wall section, the electrical conductivity of the electrically conductive structure changes and/or a position of the electrically conductive structure varies and/or the electrically conductive structure is formed with a frequency-dependent reflection coefficient.

2. Container (1) according to claim 1, **characterised in that** the distance (d) between the electrically conductive structure and the metallically formed side wall section has a value of λ/8 to less than λ/2.

3. Container (1) according to claim 2, **characterised in that** the distance (d) between the electrically conductive structure and the metallically formed side wall section has a value of λ/4.

4. Container (1) according to one of claims 1 to 3, **characterised in that** the electrically conductive structure has a metallic surface (8) and said metallic surface (8) is rotatably mounted and drivable.

5. Container (1) according to claim 4, **characterised in that** the metallic surface (8) is formed as a section of a circular surface or a polygonal surface.

6. Container (1) according to claim 5, **characterised in that** a pivot point of the metallic surface (8) is arranged in or outside the geometric centre of the metallic surface (8).

7. Container (1) according to one of claims 1 to 3, **characterised in that** the electrical conductivity of the electrically conductive structure can be changed by applying an electrical voltage.

8. Container (1) according to claim 7, **characterised in that** the electrically conductive structure has an electrochromic layer (11).

9. Container (1) according to claim 8, **characterised in that** the electrochromic layer (11) is divided into at least two layer sections (11a) and that the electrical voltage can be applied to said layer sections (11a) independently of one another.

10. Container (1) according to one of claims 1 to 3, **characterised in that** the electrically conductive structure has a frequency-selective surface (FSS) and **in that** the electrically conductive structure is transparent to electromagnetic radiation of one ISM band for UHF RFID applications and reflective to electromagnetic radiation of another ISM band for UHF RFID applications.

11. Container (1) for storing objects in the container interior (4), said container (1) having side walls (2), at least one of said side walls (2) having at least one metallically formed side wall section, said container (1) having at least one UHF RFID antenna (5) for emitting electromagnetic radiation of wavelength λ inside said container (4), said UHF RFID antenna (5) being connectible to an RFID reading device (6), said container having at least one planar, electrically conductive structure, said electrically conductive structure being arranged at a distance from the metallically formed side wall section in the direction of the container interior (4), and wherein the planar, electrically conductive structure cyclically changes its position with respect to the metallically formed side wall section and/or said electrically conductive structure cyclically changes its electrical properties, **characterised in that** the distance (d) between said electrically conductive structure and the metallically formed side wall varies cyclically with a value of λ/8 to less than λ/2.

12. Container (1) according to one of the preceding claims, **characterised in that** the electrically conductive structure, of which there is at least one, is arranged at the level of a shelf of the container (1).

13. Container (1) according to one of the preceding claims, **characterised in that** said container (1) is a refrigerator or a vending machine.

## Revendications

1. Conteneur (1) pour le stockage d'objets à l'intérieur du conteneur (4), le conteneur (1) présentant des parois latérales (2) et au moins une de ces parois latérales (2) présentant au moins une section de paroi latérale métallique et le conteneur (1) présentant à l'intérieur du conteneur (4) au moins une antenne RFID UHF (5) pour l'émission d'un rayonnement électromagnétique de longueur d'onde λ et cette antenne RFID UHF (5) pouvant être reliée à un dispositif de lecture RFID (6), le conteneur présentant au moins une structure plane électriquement conductrice et cette structure électriquement conductrice étant disposée à distance de la section de paroi latérale métallique en direction de l'intérieur du conteneur (4) et la structure plane électriquement conductrice change de manière cyclique dans sa position par rapport à la section de paroi latérale métallique et/ou dans ses propriétés électriques, **caractérisé en ce que** la distance (d) entre la structure électriquement conductrice et la section de paroi latérale métallique présente une valeur différente de λ/2 ou différente d'un multiple de λ/2 et **en ce que**, dans un plan (10) parallèle à la section de paroi latérale métallique, la conductivité électrique de la structure électriquement conductrice change et/ou une position de la structure électriquement conductrice varie et/ou la structure électriquement conductrice possède un coefficient de réflexion dépendant de la fréquence.

2. Conteneur (1) selon la revendication 1 **caractérisé en ce que** la distance (d) entre la structure électriquement conductrice et la partie de paroi latérale métallique a une valeur de λ/8 à moins de λ/2.

3. Conteneur (1) selon la revendication 2 **caractérisé en ce que** la distance (d) entre la structure électriquement conductrice et la partie de paroi latérale métallique a une valeur de λ/4.

4. Conteneur (1) selon l'une des revendications 1 à 3 **caractérisé en ce que** la structure électriquement conductrice présente une surface métallique (8) et cette surface métallique (8) est montée rotative et peut être entraînée.

5. Conteneur (1) selon la revendication 4 **caractérisé en ce que** la surface métallique (8) est conçue comme une section de surface circulaire ou une surface polygonale.

6. Conteneur (1) selon la revendication 5 **caractérisé en ce qu'**un point de rotation de la surface métallique (8) est disposé à l'intérieur ou à l'extérieur du centre de gravité géométrique de la surface métallique (8).

7. Conteneur (1) selon l'une des revendications 1 à 3 **caractérisé en ce que** la conductivité électrique de la structure électriquement conductrice peut être modifiée en appliquant une tension électrique.

8. Conteneur (1) selon la revendication 7 **caractérisé en ce que** la structure électriquement conductrice présente une couche électrochrome (11).

9. Conteneur (1) selon la revendication 8 **caractérisé en ce que** la couche électrochrome (11) est divisée en au moins deux sections de couche (11a) et **en ce que** ces sections de couche (11a) peuvent être soumises à la tension électrique indépendamment l'une de l'autre.

10. Conteneur (1) selon l'une des revendications 1 à 3 **caractérisé en ce que** la structure électriquement conductrice présente une surface sélective en fréquence (FSS) et **en ce que** la structure électriquement conductrice est transparente au rayonnement électromagnétique d'une bande ISM pour les applications RFID UHF et réfléchissante au rayonnement électromagnétique d'une autre bande ISM pour les applications RFID UHF.

11. Conteneur (1) pour le stockage d'objets à l'intérieur du conteneur (4), le conteneur (1) présentant des parois latérales (2) et au moins l'une de ces parois latérales (2) présentant au moins une section de paroi latérale métallique, et le conteneur (1) présentant à l'intérieur du conteneur (4) au moins une antenne RFID UHF (5) pour l'émission d'un rayonnement électromagnétique de longueur d'onde λ et cette antenne RFID UHF (5) pouvant être reliée à un dispositif de lecture RFID (6), le conteneur présentant au moins une structure plane électriquement conductrice et cette structure électriquement conductrice est disposée à distance de la section de paroi latérale métallique en direction de l'intérieur du conteneur (4) et la structure plane électriquement conductrice changeant de manière cyclique de position par rapport à la section de paroi latérale métallique et/ou changeant de propriétés électriques, **caractérisé en ce que** la distance (d) entre la structure électriquement conductrice et la paroi latérale métallique varie de manière cyclique d'une valeur de λ/8 à moins de λ/2.

12. Conteneur (1) selon l'une des revendications précédentes, **caractérisé en ce qu'**au moins une structure électriquement conductrice est disposée au niveau d'une étagère du conteneur (1).

13. Conteneur (1) selon l'une des revendications précédentes, **caractérisé en ce que** le conteneur (1) est un réfrigérateur ou un distributeur automatique.
